# EUROPÄISCHE PATENTSCHRIFT

(11) **EP 1 233 619 B1**
(45) Veröffentlichungstag und Bekanntmachung des Hinweises auf die Patenterteilung: **26.04.2006**
(21) Anmeldenummer: 02000579.9
(22) Anmeldetag: 10.01.2002
(51) Int. Cl.: H04N 7/167, H04H 1/00

(54) **Verfahren zum Verschlüsseln von Datenpaketen**
Method for encrypting of data packets
Procédé de chiffrage des paquets de données

(30) Priorität: 17.02.2001 DE 10107523
(43) Veröffentlichungstag der Anmeldung: 21.08.2002
(73) Patentinhaber: Deutsche Telekom AG, 53113 Bonn (DE)
(72) Erfinder: Schneider, Tim, 64295 Darmstadt (DE); Eichentopf, Jens, 65197 Wiesbaden (DE); Fingerholz, Joachim, 64295 Darmstadt (DE); Heuser, Stephan, 64409 Messel (DE); Roller, Martin, 55276 Oppenheim (DE); Schaaf, Christoph, 64291 Darmstadt (DE); Schwenk, Jörg, Dr., 91239 Henfenfeld (DE)

(56) Entgegenhaltungen:
- EP-A- 0 723 371
- EP-A- 0 822 720
- WO-A-98/08341
- GUILLOU L C ET AL: "ENCIPHERMENT AND CONDITIONAL ACCESS" SMPTE JOURNAL, SMPTE INC. SCARSDALE, N.Y, US, Bd. 103, Nr. 6, 1. Juni 1994 (1994-06-01), Seiten 398-406, XP000457575 ISSN: 0036-1682
- SILVERBERG M: "SICHERT SIMULCRYPT DIE EINFUHRUNG VON DIGITAL-TV?" FUNKSCHAU, FRANZIS-VERLAG K.G. MUNCHEN, DE, Nr. 19, 30. August 1996 (1996-08-30), Seiten 30-31, XP000623676 ISSN: 0016-2841

## Beschreibung

Die Erfindung betrifft ein Verfahren zum Verschlüsseln von Datenpaketen gemäß der im Oberbegriff des Anspruchs 1 angegebenen Art sowie eine Schaltungsanordnung zur Durchführung des Verfahrens gemäß dem Anspruch 15.

Ein derartiges Verfahren zum Verschlüsseln von Datenpaketen ist seit längerem bekannt. Hierbei werden von einem Nachrichtenrechner - Verschlüsselungsclient - nacheinander jeweils ein Datenpaket an einen Chiffrierrechner - Verschlüsselungsserver - gesendet. Das Datenpaket wird dann sowohl mittels eines ersten Schlüssels zu einer ersten verschlüsselten Nachricht als auch mittels eines zweiten Schlüssels zu einer zweiten verschlüsselten Nachricht verschlüsselt. Anschließend werden diese verschlüsselten Nachtrichten dann an zumindest eine Empfängereinheit von dem Chiffrierrechner weitergegeben.

Dieses Verfahren wird insbesondere im Zusammenhang mit dem digitalen Fernsehen nach dem Digital Video Broadcasting (DVB) Standard eingesetzt, der auf dem Common Scrambling Algorithmus basiert. Hierbei werden Fernsehprogramme unter Verwendung eines häufig wechselnden Kontrollwortes verschlüsselt. Diese Kontrollworte werden im selben Datenstrom wie die Produktdaten, nämlich Audio- und Videodaten des Fernsehprogramms, verschlüsselt übertragen. Die verschlüsselten Kontrollworte liegen dabei als sogenannte "Entitlement Control Messages" (ECMs) vor.

Derzeit sind in Europa mehrere verschiedene auf dem DVB-Standard basierende Sicherheitsarchitekturen auf dem Markt. Diese Sicherheitsarchitekturen ermöglichen es den Pay-TV-Anbietern, Fernsehprogramme oder einzelne Sendungen verschlüsselt anzubieten. Ein Bestandteil dieser Sicherheitsarchitekturen sind Smart Cards, die in entsprechend vorbereitete digitale Receiver für den Teilnehmer des Pay-TV gesteckt werden. Diese Smart Cards sind in der Lage, bei entsprechend gesetzten Zugriffsrechten, die ECMs zu entschlüsseln und somit die damit übertragenen Audio- und Videodaten mit den ECMs zu entschlüsseln. Mit Hilfe dieser digitalen Receiver kann somit der Pay-TV-Teilnehmer das ausgestrahlte Fernsehnprogramm entschlüsselt ansehen.

Da es in einigen Ländern mehrere Pay-TV-Anbieter gibt, die verschiedene Sicherheitsarchitekturen, also verschiedene Schlüssel zum Verschlüsseln der Datenpakete in ECMs und damit auch verschiedenartige ECMs, benutzen, kann es für einen Pay-TV-Anbieter sinnvoll sein, sein Programm so zu verschlüsseln, dass nicht nur Teilnehmer des Pay-TV mit einem ersten digitalen Receiver, der auf einer digitalen Sicherheitsarchitektur des eines ersten Anbieters aufbaut, sondern auch Teilnehmer des Pay-TV mit einem zweiten digitalen Receiver, der auf einer anderen, zweiten Sicherheitsarchitektur eines zweiten Anbieters aufbaut, die Programme empfangen und mittels ihres digitalen Receivers entschlüsseln können. Diese Situation wird es in absehbarer Zeit auch in Deutschland geben, wenn einzelne Regionalkabelgesellschaften eigene Pay-TV Fernsehprogramme, beispielsweise in ihren Kabelnetzen, anbieten werden, die neben den bereits etablierten Pay-TV Sendern senden.

Wie oben erwähnt, ist es bekannt, Datenpakete, die auf dem DVB Standard basieren sowohl von einem ersten Schlüssel zu ersten verschlüsselten Nachrichten sowie von weiteren Schlüsseln zu weiteren verschlüsselten Nachrichten in Form von ECMs zu verschlüsseln. Anschließend werden die ECMs, also die mittels unterschiedlicher Schlüssel verschlüsselten Nachrichten, über den Nachrichtenrechner an den Multiplexer weitergeleitet (SimulCrypt-Standard).

Dieser nach dem SimulCrypt-Standard arbeitende Nachrichtenrechner arbeitet dabei mit mehreren Chiffrierrechner zusammen, wobei der erste Chiffrierrechner die Datenpakete mit einem ersten Schlüssel und die weiteren Chiffrierrechner dieselben Datenpakete jeweils mit einem weiteren Schlüssel verschlüsseln. Die verschlüsselten Nachrichten der einzelnen Chiffrierrechner liegen dann als ECMs vor und werden von den Chiffrierrechnern an den Nachrichtenrechner weitergeleitet. Mit Hilfe des SimulCrypt-Standards werden die ECMs nach den verschiedenen Sicherheitsarchitekturen, also die mit Hilfe verschiedener Schlüssel verschlüsselten Nachrichten, zeitlich synchron an den Multiplexer weitergeben und an die Teilnehmer des Pay-TV ausgestrahlt. Dieser SimulCrypt-Standard ist dabei die softwaremäßige Verwaltung der mit unterschiedlichen Schlüsseln verschlüsselten Nachrichten, mit dessen Hilfe diese verschlüsselten Nachrichten zeitlich synchron an den Multiplexer weitergerichten, mit dessen Hilfe diese verschlüsselten Nachrichten zeitlich synchron an den Multiplexer weitergeleitet werden. Dies ist notwendig, da die mit unterschiedlichen Schlüsseln verschlüsselten Nachrichten den Fernsehprogrammen zugeordnet werden und von verschiedenen Teilnehmern des Pay-TV gleichzeitig empfangen und entschlüsselt werden sollen.

Nachteilig daran ist, dass dabei nur Sicherheitsarchitekturen, verwendet werden können, die den SimulCrypt-Standard unterstützen.

Aus der Druckschrift WO 98/08341 ist ein Verfahren bekannt, bei den zwei separate Anbieter ihre jeweiligen, voneinander verschiedenen Programme mit unterschiedlichen Verschlüsselungssystemen getrennt bzw. jeder für sich verschlüsseln. Die beiden verschlüsselten Programme werden in einem Multiplexer zusammengefasst und dann in einem gemeinsamen Transportstrom übertragen.

Der Erfindung liegt die Aufgabe zugrunde, ein Verfahren zum Verschlüsseln von Datenpaketen gemäß der im Oberbegriff des Anspruches 1 angegebenen Art derart weiterzubilden, dass unter Vermeidung der genannten Nachteile unterschiedlichste Schlüssel verwendet werden können, ohne auf den SimulCrypt-Standard aufzubauen.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass durch Zwischenschaltung eines weiteren Rechners die Verwaltung der von dem Nachrichtenrechner zum Chiffrierrechner zu leitenden Datenpakete sowie der vom Chiffrierrechner zur Empfängereinheit zu leitenden verschlüsselten Nachrichten einfach zu organisieren und zeitlich zu synchronisieren ist.

Nach der Erfindung wird daher zwischen dem Nachrichtenrechner und dem Chiffrierrechner ein weiterer Rechner zwischengeschaltet, der alle Datenpakete des Nachrichtenrechners an den Chiffrierrechner weiterleitet und alle verschlüsselten Nachrichten des Chiffrierrechners erhält und dann evtl. zeitlich verzögert an den Nachrichtenrechner weiterleitet. Der weitere Rechner erfüllt dabei die Aufgaben eines Proxy Servers gegenüber dem Nachrichtenrechner und dem Chiffrierrechner: Gegenüber dem Nachrichtenrechner tritt er als Chiffrierrechner auf, und gegenüber dem Chiffrierrechner als Nachrichtenrechner.

Damit der jeweilige Schlüssel, also die jeweilige Sicherheitsarchitektur, die Datenpakete auch erkennt und entsprechend verschlüsseln kann, leitet gemäß einer Ausführungsform der Erfindung der weitere Rechner ein Datenpaket für den ersten Schlüssel unverändert an den Chiffrierrechner weiter und passt dieses Datenpaket aber auch zumindest für den zweiten Schlüssel an und leitet es dann an den Chiffrierrechner weiter, damit der zweite Schlüssel, also die zweite Sicherheitsarchitektur, das angepasste Datenpaket erkennen und entsprechend verschlüsseln kann. Beispielsweise bei Pay-TV ist dies wichtig, da es hier unterschiedliche Sicherheitsarchitekturen gibt, die es erforderlich machen, dass die Datenpakete zunächst entsprechend angepasst werden müssen, damit diese dann erkannt und verschlüsselt werden können.

Gemäß einer Ausführungsform der Erfindung wird als Empfängereinheit für zumindest die ersten verschlüsselten Nachrichten der Nachrichtenrechner verwendet. Als Empfängereinheit für zumindest die zweiten verschlüsselten Nachrichten wird eine weitere Rechnereinheit verwendet. Der Nachrichtenrechner sendet dabei zumindest die ersten verschlüsselten Nachrichten an die weitere Rechnereinheit. Als weitere Recheneinheit kann dabei ein Synchronisationsrechner verwendet werden, der die zeitliche Synchronisation der von dem weiteren Rechner oder von dem Nachrichtenrechner empfangenen verschlüsselten Nachrichten herstellt. Beispielsweise durch den Weg der ersten verschlüsselten Nachricht über den Nachrichtenrechner kann die zeitliche Synchronisation zerstört werden.
Alle verschlüsselten Nachrichten werden insbesondere an einen Multiplexer geleitet. Der Multiplexer kann auch die Aufgaben des Synchronrechners übernehmen. Der Multiplexer verknüpft die verschlüsselten Nachrichten mit zugeordneten Produktdaten. Anschließend werden diese zusammen mit den verschlüsselten Nachrichten zeitlich synchron an die Teilnehmereinheiten gesendet.
Gemäß einer Ausführungsform der Erfindung werden mehrere Chiffrierrechner mit jeweils einem eigenen Schlüssel verwendet. Die Chiffrierrechner können dabei jeweils in einer sicheren Umgebung angeordnet und somit vor Manipulationen von Unberechtigten sicher sein.

Vorzugsweise werden die Datenpakete zum digitalen Fernsehen verwendet und basieren auf dem Digital Video Broadcasting (DVB) Standard unter Verwendung eines Common Scrambling Algorithmus. Als Datenpakete werden dabei insbesondere Kontrollworte und den Produktdaten zugeordneten Informationen verwendet. Die Verschlüsselung der Datenpakete erfolgt zu Entitlement Control Messages (ECMs), die die verschlüsselten Nachrichten bilden.

Die Produktdaten betreffen insbesondere Video- und/oder Audiodaten.

Die Teilnehmereinheiten, vorzugsweise die Teilnehmer des Pay-TV, weisen jeweils zumindest einen Schlüssel beispielsweise in Form einer Smart Card in einem digitalen Receiver zum Entschlüsseln zumindest einer Art von verschlüsselten Nachrichten auf.

Weitere Vorteile, Merkmale und Anwendungsmöglichkeiten des vorliegenden Verfahrens zum Verschlüsseln von Datenpaketen sowie eine entsprechende Schaltungsanordnung zur Durchführung des Verfahrens ergeben sich aus der nachfolgenden Beschreibung in Verbindung mit den in der Zeichnung dargestellten Ausführungsbeispielen.

Die Erfindung wird im folgenden anhand der in der Zeichnung dargestellten Ausführungsbeispiele näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: eine schematische Darstellung einer Schaltungsanordnung zum Verschlüsseln von Datenpaketen gemäß einer ersten Ausführungsform der Erfindung;
- Fig. 2: eine schematische Darstellung einer Schaltungsanordnung zum Verschlüsseln von Datenpaketen gemäß einer weiteren Ausführungsform der Erfindung.

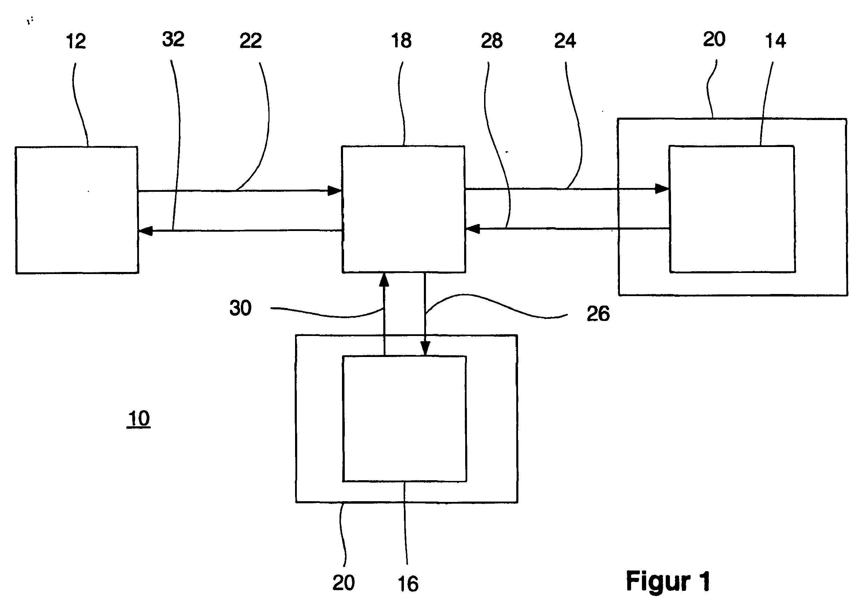

In Fig. 1 ist schematisch eine Schaltungsanordnung 10 zum Verschlüsseln von Datenpaketen dargestellt.

Die Schaltungsanordnung besteht aus einem Nachrichtenrechner 12, einem ersten Chiffrierrechner 14, einem zweiten Chiffrierrechner 16 sowie einem weiteren Rechner 18. Der erste Chiffrierrechner 14 und der zweite Chiffrierrechner 16 befinden sich in einer sicheren Umgebung 20, d.h., dass diese Chiffrierrechner 14 und 16 vor Manipulationen von Unberechtigten sicher sind. Es kann somit kein Unberechtigter auf diese Chiffrierrechner 14 und 16 zugreifen und ggf. den Schlüssel zum Verschlüsseln von Datenpaketen ermitteln.

Über ein hier nicht dargestelltes Netzwerk ist der Nachrichtenrechner 12 mit dem weiteren Rechner 18 verbunden, der wiederum sowohl mit dem ersten Chiffrierrechner 14 als auch mit dem zweiten Chiffrierrechner 16 über ein ebenfalls hier nicht dargestelltes Netzwerk zusammenwirkt.

Neben dem ersten Chiffrierrechner 14 und dem zweiten Chiffrierrechner 16 können noch weitere Chiffrierrechner vorgesehen sein, die dann ebenfalls mit dem weiteren Rechner 18 verbunden sind. Aus Gründen der Übersicht wird jedoch im folgenden nur von den beiden Chiffrierrechnern 14 und 16 ausgegangen.

Der Nachrichtenrechner 12 spielt in dieser Schaltungsanordnung die Rolle des Klartextlieferanten, der über die Netzwerkverbindung in einem ersten Schritt 22 den Klartext - Datenpaket - an den weiteren Rechner 18 sendet. Dieser leitet den Klartext sowohl an den ersten Chiffrierrechner 14 als auch an den zweiten Chiffrierrechner 16 in einem zweiten Schritt 24 und 26 weiter.

Der erste Chiffrierrechner 14 verschlüsselt den in Form von Datenpaketen vorliegenden Klartext in erste verschlüsselte Nachrichten und der zweite Chiffrierrechner 16 verschlüsselt die selben Datenpakete in zweite verschlüsselte Nachrichten. Die ersten verschlüsselten Nachrichten werden von dem Chiffrierrechner 14 in einem weiteren Schritt 28 an den weiteren Rechner 18 und die zweiten verschlüsselten Nachrichten von dem zweiten Chiffrierrechner 16 in einem weiteren Schritt 30 an den weiteren Rechner 18 gesandt. Die ersten verschlüsselten Nachrichten werden dann von dem weiteren Rechner 18 zeitlich synchron an den Nachrichtenrechner 12 in einem vierten Schritt 32 weitergeleitet, der in diesem Fall als Empfängereinheit für die verschlüsselten Nachrichten dient.

Hierdurch ist es möglich, dass der Nachrichtenrechner sich in einer relativ unsicheren Umgebung befinden kann, d.h., er muss nicht zwingend vor Angriffen von Außen oder durch Missbrauch ausreichend geschützt sein. Um jedoch die Sicherheit der Schlüssel der Chiffrierrechner 14 und 16 zu gewährleisten, liegen die Chiffrierrechner 14 und 16 in vom Nachrichtenrechner getrennten besonders gesicherten Umgebungen 20. Die Verbindung zwischen dem Nachrichtenrechner 12 über den weiteren Rechner 18 zu den Chiffrierrechnern 14 und 16 wird mit einer beliebigen Art von Netzwerk realisiert, das im Einzelnen jedoch nicht dargestellt ist.

Mit Hilfe dieser Schaltungsanordnung 10 kann der Klartext zeitgleich mit zwei verschiedenen Schlüsseln verschlüsselt werden. Zeitgleich bedeutet hierbei, dass erst dann die Kontrolle über die weitere Verarbeitung des verschlüsselten Klartextes an den Nachrichtenrechner 12 zurückgegeben wird, wenn sichergestellt wurde, dass alle weiteren Kryptosysteme, also die Chiffrierrechner 14 und 16, ihre Verschlüsselung beendet haben.

Mit Hilfe des weiteren Rechners 18 wird somit ein Mechanismus zur Synchronisation aller Chiffrierrechner 14 und 16 bei minimalen Eingriffen in bestehende Rechner- und Netzwerkarchitekturen geschaffen. Der weitere Rechner 18 dient als eine Art "Proxy Servers", also als ein virtueller Verschlüsselungsserver, der in die Netzwerkverbindung zwischen dem Nachrichtenrechner 12 und den Chiffrierrechnern 14 und 16 eingebaut ist. Der weitere Rechner 18 erhält alle Datenpakete des Nachrichtenrechners 12 und leitet diese, nämlich den Klartext, nicht nur an einen Chiffrierrechner 14, sondern zusätzlich auch an alle weiteren angeschlossenen Chiffrierrechner, also in diesem Fall an den zweiten Chiffrierrechner 16 weiter. Erst wenn der weitere Rechner 18 alle verschlüsselten Nachrichten von den Chiffrierrechnern 14 und 16 erhalten hat, leitet er diese an den Nachrichtenrechner 12 weiter.

Von dem Einsatzgebiet hängt es ab, inwiefern nun die verschlüsselten Nachrichten weiterverarbeitet werden.

Bei dieser Ausführungsform wird davon ausgegangen, dass die Chiffrierrechner 14 und 16 die Bearbeitung ihrer verschlüsselten Nachrichten selbst verwalten.

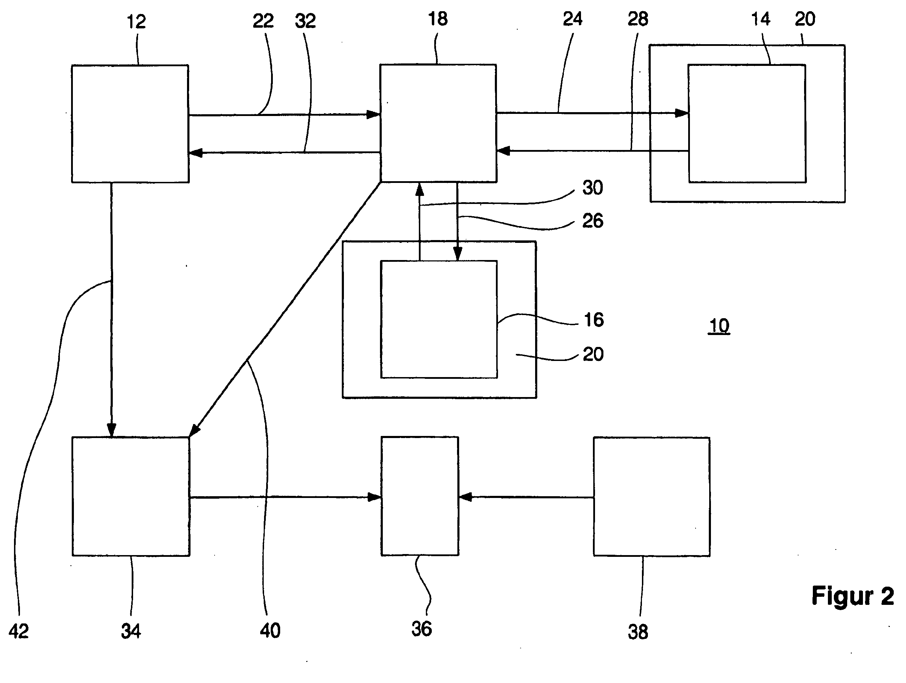

In Fig. 2 ist eine weitere Ausführungsform einer Schaltungsanordnung 10 nach der Erfindung schematisch dargestellt.

Die Schaltungsanordnung 10 dient dabei dem digitalen Fernsehen nach dem DVB-Standard. Der DVB-Standard sieht Verschlüsslungstechniken vor, um Pay-TV auf digitaler Basis zu ermöglichen. Der DVB-Standard benutzt dazu den Common Scrambling Algorithmus, um Fernsehprogramme unter Verwendung eines häufig wechselnden Kontrollwortes zu verschlüsseln. Diese Kontrollworte werden im selben Datenstrom wie die Audio- Videodaten des Fernsehprogramms verschlüsselt übertragen. Die verschlüsselten Kontrollworte liegen dabei als sogenannte "Entitlement Control Messages" (ECMs) vor.

Die Schaltungsanordnung 10 besteht auch bei dieser Ausführungsform aus einem Nachrichtenrechner 12, einem ersten Chiffrierrechner 14 und einem zweiten Chiffrierrechner 16. Der erste und zweite Chiffrierrechner 14 und 16 sind mit dem weiteren Rechner 18 verbunden, der teilweise als Proxy Server gegenüber den Chiffrierrechnern 14 und 16 als auch gegenüber dem Nachrichtenrechner 12 dient. Der weitere Rechner 18 wirkt mit dem Nachrichtenrechner 12 als auch mit einem Netzwerk Analyzer 34 über ein hier nicht im einzelnen dargestelltes Netzwerk zusammen.

Wie oben ausgeführt, können an den als Proxy Server arbeitenden weiteren Rechner 18 auch zusätzliche Chiffrierrechner über ein Netzwerk angebunden sein. Aus Gründen der Übersicht hat man sich bei dieser Ausführungsform jedoch auf die beiden Chiffrierrechner 14 und 16 beschränkt.

Die Chiffrierrechner 14 und 16 sind jeweils in einer sicheren Umgebung 20, um diese vor Manipulationen von Unberechtigten und Schlüssel zum Verschlüsseln der Datenpakete vor Offenbarung zu schützen.

Der Netzwerk Analyzer 34 ist sowohl mit dem Nachrichtenrechner 12 als auch mit dem weiteren Rechner 18 über ein Netzwerk angeschlossen. Der Netzwerk Analyzer 34 wirkt mit einem Multiplexer 36 zusammen, der wiederum mit einer Audio- und Videodatenquelle 38 zusammenwirkt.

Der Nachrichtenrechner 12 sendet von ihm generierte Kontrollworte mit den Produktdaten, nämlich Audio- und Videodaten, zugeordneten Informationen in einem ersten Schritt 22 an den weiteren Rechner 18, der in einem zweiten Schritt 24 und 26 die Kontrollworte mit den den Produktdaten zugeordneten Informationen sowohl an den Chiffrierrechner 14 als auch an den Chiffrierrechner 16 in einem zweiten Schritt 24 und 26 weiterleitet. Die Chiffrierrechner 14, 16 ermitteln anhand der den Produktdaten zugeordneten Informationen den richtigen Produktschlüssel und verschlüsseln damit jeweils die Kontrollworte. Der resultierende Chiffretext - verschlüsselte Nachricht - besteht somit aus einem speziell an die Produktdaten angepassten Format, welches von einem hier nicht dargestellten digitalen Receiver mit gesetzten Zugriffsrechten die Teilnehmer des Pay-TV verstanden und entschlüsselt wird. Dies wird weiter unten noch näher erläutert. Dieser Chiffretext, also die verschlüsselte Nachricht, liegt in Form von ECMs vor.

Der erste Chiffrierrechner 14 erzeugt also erste ECMs, die in einem weiteren Schritt 28 an den weiteren Rechner 18 weitergeleitet werden. Der zweite Chiffrierrechner 16 erzeugt zweite ECMs, die in einem weiteren Schritt 30 an den weiteren Rechner 18 weitergeleitet werden.

Der weitere Rechner 18 schickt in einem vierten Schritt 32 und 40 die ersten ECMs an den Nachrichtenrechner 12 sowie die zweiten ECMs an den Netzwerk Analyzer 34. Der Netzwerk Analyzer 34 wartet ab, bis die ersten ECMs vom Nachrichtenrechner 12 in einem fünften Schritt 42 zu ihm gelangt sind und leitet dann zeitlich synchron die ersten und zweiten ECMs zum Multiplexer 36 weiter. Der Multiplexer 36 fügt zu den Audio- und Videodaten des Fernsehprogramms die ersten und zweiten ECMs dazu. Von dem Multiplexer 36 gelangen die Daten zu den Teilnehmern des Pay-TVs, die hier nicht dargestellt sind.

Die Teilnehmer des Pay-TVs empfangen die Audio- und Videodaten zusammen mit den ersten und zweiten ECMs mit Hilfe ihres digitalen Receivers. Der digitale Receiver weist, beispielsweise in einer Smart Card, einen Schlüssel zum Entschlüsseln der ersten oder zweiten ECMs auf. Nach Entschlüsseln der ersten oder zweiten ECMs können die Audio- und/oder Videodaten ohne Beeinträchtigung vom Teilnehmer des Pay-TV empfangen werden.

Von dem Multiplexer werden also die ECMs zusammen mit dem dazu gehörenden MPEG2 Datenstrom in einen Transportstrom eingefügt. Nunmehr ist man in der Lage, eine Art SimulCrypt Standard zu betreiben, ohne diesen jedoch zu verwenden. Anstelle eines Nachrichtenrechners 12, der auf dem SimulCrypt Standard arbeitet und in der Lage ist, nicht nur eine Verbindung zu den Chiffrierrechnern 14 und 16 aufzubauen, sondern zusätzlich weitere Verbindungen zu weiteren Chiffrierrechnern aufzubauen, um ECMs für mehrere Verschlüsselungssysteme erzeugen zu lassen, wird der weitere Rechner 18 zwischengeschaltet, der diese Aufgabe übernimmt.

Der zwischen Nachrichtenrechner 12 und den Chiffrierrechnern 14 und 16 zwischengeschaltete weitere Rechner 18 - Proxy Server - fängt alle Kontrollworte mit den dazugehörigen Produktinformationen ab und leitet dies an die Chiffrierrechner 14 und 16 weiter. Erst wenn alle Chiffrierrechner 14, 16 mit der Erzeugung der ECMs fertig sind, d.h., alle Chiffrierrechner 14, 16 haben ihre ECMs an den weiteren Rechner 18 zurückgesandt, leitet dieser die ersten ECMs an den Nachrichtenrechner 12 sowie die zweiten ECMs an den Netzwerk Analyzer 34 weiter. Dieser Netzwerk Analyzer 34 wartet ab, bis alle ECMs eingegangen sind, also sowohl die zweiten ECMs vom weiteren Rechner 18 als auch die ersten ECMs, die von dem weiteren Rechner 18 zum Nachrichtenrechner 12 und von diesem zum Netzwerk Analyzer 34 geschickt werden. Die ersten und zweiten ECMs werden in einem gemeinsamen Datenstrom an den Multiplexer 36 geschickt. Hierdurch wird gewährleistet, dass der Multiplexer 36 zusammen mit den Video- und Audiodatenstrom alle zugeordneten ECMs erhält.

Die Erfindung zeichnet sich durch die einfache Maßnahme aus, einen weiteren Rechner 18 zwischen Nachrichtenrechner 12 und Chiffrierrechner 14 und 16 zwischenzuschalten, der teilweise als "Proxy Rechner" arbeitet. Hierdurch können die verschlüsselten Nachrichten synchron an Empfängereinheiten, wie den Nachrichtenrechner 12 und/oder den Netzwerk Analyzer 34 geschickt und weiterverarbeitet werden.

### BEZUGSZEICHENLISTE

- 10: Schaltungsanordnung
- 12: Nachrichtenrechner
- 14: erster Chiffrierrechner
- 16: zweiter Chiffrierrechner
- 18: weiterer Rechner
- 20: sichere Umgebung
- 22: erster Schritt
- 24: zweiter Schritt
- 26: zweiter Schritt
- 28: weiterer Schritt
- 30: weiterer Schritt
- 32: vierter Schritt
- 34: Netzwerk Analyzer
- 36: Multiplexer
- 38: Audio- und Videodatenquelle
- 40: vierter Schritt
- 42: fünfter Schritt

## Patentansprüche

1. Verfahren zum Verschlüsseln von Datenpaketen mit zumindest zwei Chiffrierrechnern (14, 16) und einem das Datenpaket zum Chiffrierrechner (14, 16) sendenden Nachrichtenrechner (12), wobei jeweils ein Datenpaket sowohl mittels eines ersten Schlüssels zu einer ersten verschlüsselten Nachricht als auch mittels eines zweiten Schlüssels zu einer zweiten verschlüsselten Nachricht verschlüsselt und diese verschlüsselten Nachrichten dann an zumindest eine Empfängereinheit (12, 34) von den zumindest zwei Chiffrierrechnern (14, 16) weitergegeben werden, wobei zwischen Nachrichtenrechner (12) und zwei Chiffrierrechnern (14, 16) ein weiterer Rechner (18) zwischengeschaltet wird, der Datenpakete des Nachrichtenrechners (12) an die Chiffrierrechner (14, 16) weiterleitet und alle verschlüsselten Nachrichten der Chiffrierrechner (14, 16) erhält und dann zeitlich synchron an die Empfängereinheit (12, 34) weiterleitet, um die Chiffrierrechner (14, 16) zu synchronisieren.

2. Verfahren nach Anspruch 1, **dadurch gekennzeichnet, dass** der weitere Rechner (18) ein Datenpaket für den ersten Schlüssel unverändert an den Chiffrierrechner (14) weiterleitet und der weitere Rechner (18) dieses Datenpaket auch zumindest für den zweiten Schlüssel anpasst und dann an den Chiffrierrechner (16) weiterleitet, damit der zweite Schlüssel das angepasste Datenpaket erkennen und entsprechend verschlüsseln kann.

3. Verfahren nach Anspruch 1 oder 2, **dadurch gekennzeichnet, dass** als Empfängereinheit für zumindest die ersten verschlüsselten Nachrichten der Nachrichtenrechner (12) verwendet wird.

4. Verfahren nach einem der vorangehenden Ansprüche, **dadurch gekennzeichnet, dass** als Empfängereinheit für zumindest die zweiten verschlüsselten Nachrichten eine weitere Rechnereinheit (34) verwendet wird.

5. Verfahren nach Anspruch 4, **dadurch gekennzeichnet, dass** der Nachrichtenrechner (12) zumindest die ersten verschlüsselten Nachrichten an die weitere Rechnereinheit (34 oder 36) sendet.

6. Verfahren nach Anspruch 4 oder 5, **dadurch gekennzeichnet, dass** als weitere Recheneinheit ein Synchronisationsrechner (34) verwendet wird, der die zeitliche Synchronisation der von dem weiteren Rechner (18) oder von dem Nachrichtenrechner (12) empfangenen verschlüsselten Nachrichten herstellt.

7. Verfahren nach Anspruch 4 bis 6, **dadurch gekennzeichnet, dass** alle verschlüsselten Nachrichten mittelbar oder unmittelbar von der weiteren Rechnereinheit (34) empfangen und dann von dieser an einen die Nachrichten an verschiedene Teilnehmereinheiten weitersendenden Multiplexer (36) weitergeleitet werden.

8. Verfahren nach Anspruch 7, **dadurch gekennzeichnet, dass** der Multiplexer (36) den verschlüsselten Nachrichten zugeordnete Produktdaten von einer Quelle (38) erhält und diese zusammen mit den zugeordneten verschlüsselten Nachrichten zeitlich synchron an die Teilnehmereinheiten weitersendet.

9. Verfahren nach einem der vorangehenden Ansprüche, **dadurch gekennzeichnet, dass** mehrere Chiffrierrechner (14, 16) mit jeweils einem eigenen Schlüssel verwendet werden.

10. Verfahren nach einem der vorangehenden Ansprüche, **dadurch gekennzeichnet, dass** die Datenpakete zum digitalen Fernsehen verwendet werden und auf dem Digital Video Broadcasting (DVB) - Standard unter Verwendung eines Common Scrambling Algorithmus basieren.

11. Verfahren nach Anspruch 8 oder 9, **dadurch gekennzeichnet, dass** als Datenpakete Kontrollworte und den Produktdaten zugeordnete Informationen verwendet werden, wobei die dem Produktdaten zugeordneten Informationen zur Auswahl des passenden Schlüssels verwendet werden.

12. Verfahren nach Anspruch 9 und 10, **dadurch gekennzeichnet, dass** die Verschlüsselung der Datenpakete in Form von Entitlement Control Messages (ECMs) erfolgt, die die verschlüsselten Nachrichten bilden.

13. Verfahren nach Anspruch 8 bis 11, **dadurch gekennzeichnet, dass** die Produktdaten Video- und/oder Audiodaten betreffen.

14. Verfahren nach Anspruch 7 bis 12, **dadurch gekennzeichnet, dass** die Teilnehmereinheiten jeweils einen Schlüssel zum Entschlüsseln zumindest einer Art von verschlüsselten Nachrichten aufweisen.

15. Schaltungsanordnung zur Durchführung des Verfahrens nach einem der vorangehenden Ansprüche mit zumindest zwei Chiffrierrechnern (14, 16) und einem das Datenpaket zum Chiffrierrechner (14, 16) sendenden Nachrichtenrechner (12), wobei jeweils ein Datenpaket sowohl mittels eines ersten Schlüssels zu einer ersten verschlüsselten Nachricht als auch mittels eines zweiten Sohlüssels zu einer zweiten verschlüsselten Nachricht verschlüsselt und diese verschlüsselten Nachrichten dann an zumindest eine Empfängereinheit (12, 34) von den zumindest zwei Chiffrierrechnern (14, 16) weitergegeben werden, und wobei zwischen Nachrichtenrechner (12) und zwei Chiffrierrechnern (14, 16) ein weiterer Rechner (18) zwischengeschaltet wird, der Datenpakete des Nachrichtenrechners (12) an die Chiffrierrechner (14, 16) weiterleitet und alle verschlüsselten Nachrichten der Chiffrierrechner (14, 16) erhält und dann zeitlich synchron an die Empfängereinheit (12, 34) weiterleitet, um die Chiffrierrechner (14, 16) zu synchronisieren.

## Claims

1. Method for encryption of data packets using at least two encryption computers (14, 16) and a communications computer (12) for sending the data packet to the encryption computer (14, 16), wherein one data packet at a time is encrypted into a first encrypted message by means of a first key and is also encrypted into a second encrypted message by means of a second key, and the at least two encryption computers (14, 16) then transmit these encrypted messages to at least one receiving unit (12, 34), wherein connected between the communications computer (12) and the two encryption computers (14, 16) is an additional computer (18) for transmitting the data packets of the communications computer (12) to the encryption computers (14, 16) and receiving all encrypted messages from the encryption computers (14, 16), then transmitting said messages to the receiving unit (12, 34) in a time-synchronized manner in order to synchronize the encryption computers (14, 16).

2. Method according to claim 1, **characterized in that** the additional computer (18) transmits an unchanged data packet for the first key to the encryption computer (14), and the additional computer (18) also at least adjusts this data packet for the second key and then transmits it to the encryption computer (16), so that the second key can recognize and appropriately encrypt the adjusted data packet.

3. Method according to claim 1 or claim 2, **characterized in that** the communications computer (12) is used as the receiving unit for at least the first encrypted messages.

4. Method according to any one of the preceding claims, **characterized in that** an additional computer unit (34) is used as the receiving unit for at least the second encrypted messages.

5. Method according to claim 4, **characterized in that** the communications computer (12) transmits at least the first encrypted messages to the additional computer unit (34 or 36).

6. Method according to claim 4 or claim 5, **characterized in that** a synchronizing computer (34) for producing the time synchronization of the encrypted messages received from the additional computer (18) or from the communications computer (12) is used as the additional computer unit.

7. Method according to any one of claims 4 through 6, **characterized in that** all encrypted messages are directly or indirectly received by the additional computer unit (34) and are then transmitted by said computer unit to a multiplexer (36) for forwarding the messages to various subscriber units.

8. Method according to claim 7, **characterized in that** the multiplexer (36) receives the product data associated with the encrypted messages from a source (38) and forwards said product data together with the associated encrypted messages to the subscriber units in a time-synchronized manner.

9. Method according to any one of the preceding claims, **characterized in that** multiple encryption computers (14, 16) are used, each having its own key.

10. Method according to any one of the preceding claims, **characterized in that** the data packets are used for digital television, and are based on the Digital Video Broadcasting (DVB) standard using a common scrambling algorithm.

11. Method according to claim 8 or claim 9, **characterized in that** control words and the information associated with the product data are used as data packets, with the information associated with the product data being used to select the appropriate key.

12. Method according to claims 9 and 10, **characterized in that** the data packets are encrypted in the form of entitlement control messages (ECMs) comprising the encrypted messages.

13. Method according to claims 8 through 11, **characterized in that** the product data relate to video data and/or audio data.

14. Method according to claims 7 through 12, **characterized in that** the subscriber units each have a key for decrypting at least one type of encrypted message.

15. Circuit arrangement for carrying out the method according to any one of the preceding claims with at least two encryption computers (14, 16) and a communications computer (12) for sending the data packet to the encryption computer (14, 16), wherein one data packet at a time is encrypted into a first encrypted message by means of a first key and is also encrypted into a second encrypted message by means of a second key, and the at least two encryption computers (14, 16) then transmit these encrypted messages to at least one receiving unit (12, 34), and wherein connected between the communications computer (12) and the two encryption computers (14, 16) is an additional computer (18) for transmitting the data packets of the communications computer (12) to the encryption computers (14, 16) and receiving all encrypted messages from the encryption computers (14, 16), then transmitting said messages to the receiving unit (12, 34) in a time-synchronized manner in order to synchronize the encryption computers (14, 16).

## Revendications

1. Procédé de cryptage de paquets de données comportant au moins deux ordinateurs de chiffrement (14, 16) et un ordinateur de communication (12) qui envoie le paquet de données aux ordinateurs de chiffrement (14, 16), chaque paquet de données étant à la fois crypté en un premier message crypté à l'aide d'une première clé et crypté en un deuxième message crypté à l'aide d'une deuxième clé, et ces messages cryptés étant ensuite transmis à au moins une unité réceptrice (12, 34) des deux ordinateurs de chiffrement (14, 16) au moins, où, entre l'ordinateur de communication (12) et deux ordinateurs de chiffrement (14, 16), un autre ordinateur (18) est intercalé, qui transmet des paquets de données de l'ordinateur de communication (12) aux ordinateurs de chiffrement (14, 16), reçoit tous les messages cryptés des ordinateurs de chiffrement (14, 16) pour les transmettre ensuite de manière synchrone à l'unité réceptrice (12, 34) afin de synchroniser les ordinateurs de chiffrement (14, 16).

2. Procédé selon la revendication 1, **caractérisé en ce que** l'ordinateur supplémentaire (18) transmet un paquet de données inchangé pour la première clé à l'ordinateur de chiffrement (14) et que l'ordinateur supplémentaire (18) adapte ce paquet de données au moins pour la deuxième clé, puis le transmet à l'ordinateur de chiffrement (16) afin que la deuxième clé puisse reconnaître le paquet de données adapté et le crypter en conséquence.

3. Procédé selon la revendication 1 ou 2, **caractérisé en ce que** l'ordinateur de communication (12) est utilisé comme unité réceptrice pour au moins les premiers messages cryptés.

4. Procédé selon l'une quelconque des revendications précédentes, **caractérisé en ce qu'**une unité d'ordinateur (34) supplémentaire est utilisée comme unité réceptrice pour au moins les deuxièmes messages cryptés.

5. Procédé selon la revendication 4, **caractérisé en ce que** l'ordinateur de communication (12) envoie au moins les premiers messages cryptés à l'unité d'ordinateur supplémentaire (34 ou 36).

6. Procédé selon la revendication 4 ou 5, **caractérisé en ce qu'**un ordinateur de synchronisation (34) est utilisé comme unité d'ordinateur supplémentaire, qui réalise la synchronisation des messages cryptés reçus par l'ordinateur supplémentaire (18) ou par l'ordinateur de communication (12).

7. Procédé selon les revendications 4 à 6, **caractérisé en ce que** tous les messages cryptés sont reçus indirectement ou directement par l'unité d'ordinateur supplémentaire (34), puis transmis par celle-ci à un muliplexeur (36) qui fait suivre les messages à différentes unités d'abonnés.

8. Procédé selon la revendication 7, **caractérisé en ce que** le multiplexeur (36) reçoit à partir d'une source (38) des données de produit conjuguées aux messages cryptés et les fait suivre en même temps que les messages cryptés concernées, de manière synchrone, aux unités d'abonnés.

9. Procédé selon l'une quelconque des revendications précédentes, **caractérisé en ce que** plusieurs ordinateurs de chiffrement (14, 16) sont utilisés chacun avec sa clé propre.

10. Procédé selon l'une quelconque des revendications précédentes, **caractérisé en ce que** les paquets de données sont utilisés pour la télévision numérique et se basent sur la norme DVB (Digital Video Broadcasting) en utilisant un algorithme Common scrambling.

11. Procédé selon la revendication 8 ou 9, **caractérisé en ce que** sont utilisés comme paquets de données des mots de contrôle et des informations conjuguées aux données de produit, où les informations conjuguées aux données de produit sont utilisées pour le choix de la clé adaptée.

12. Procédé selon les revendications 9 et 10, **caractérisé en ce que** le cryptage des paquets de données est réalisé sous forme de messages ECM (Entitlement Control Messages) qui constituent les messages cryptés.

13. Procédé selon les revendications 8 à 11, **caractérisé en ce que** les données de produit concernent des données audio et/ou vidéo.

14. Procédé selon les revendications 7 à 12, **caractérisé en ce que** les unités d'abonnés présentent chacune une clé permettant de décrypter au moins un type de messages cryptés.

15. Disposition de circuit permettant l'exécution du procédé selon l'une quelconque des revendications précédentes, comportant au moins deux ordinateurs de chiffrement (14, 16) et un ordinateur de communication (12) envoyant le paquet de données à l'ordinateur de chiffrement (14, 16), chaque paquet de données étant à la fois crypté en un premier message crypté à l'aide d'une première clé et crypté en un deuxième message crypté à l'aide d'une deuxième clé, et que ces messages cryptés étant ensuite transmis à au moins une unité réceptrice (12, 34) des deux ordinateurs de chiffrement (14, 16) au moins et où, entre l'ordinateur de communication (12) et deux ordinateurs de chiffrement (14, 16), un autre ordinateur (18) est intercalé, qui transmet des paquets de données de l'ordinateur de communication (12) aux ordinateurs de chiffrement (14, 16), reçoit tous les messages cryptés des ordinateurs de chiffrement (14, 16) pour les transmettre ensuite de manière synchrone à l'unité réceptrice (12, 34) afin de synchroniser les ordinateurs de chiffrement (14, 16).
